# EUROPÄISCHE PATENTSCHRIFT

(11) **EP 3 996 958 B1**
(45) Veröffentlichungstag und Bekanntmachung des Hinweises auf die Patenterteilung: **16.04.2025**
(21) Anmeldenummer: 20739967.6
(22) Anmeldetag: 10.07.2020
(51) Int. Cl.: B60S 1/48, B60S 1/52

(54) **VERFAHREN ZUM BETREIBEN EINES SCHEIBENWASCHSYSTEMS**
METHOD FOR OPERATING A WINDSCREEN-WASHING SYSTEM
PROCÉDÉ POUR FAIRE FONCTIONNER UN SYSTÈME DE LAVAGE DE VITRE

(30) Priorität: 10.07.2019 DE 102019118724
(43) Veröffentlichungstag der Anmeldung: 18.05.2022
(73) Patentinhaber: VOLKSWAGEN AKTIENGESELLSCHAFT, 38440 Wolfsburg (DE)
(72) Erfinder: NIEHAUS, Christopher Daniel, 38446 Wolfburg (DE); ACKERMANN, Frank, 38154 Königslutter am Elm (DE)
(74) Vertreter: Bals & Vogel Patentanwälte PartGmbB
(86) Internationale Anmeldenummer: PCT/EP2020/069593
(87) Internationale Veröffentlichungsnummer: WO 2021/005218

(56) Entgegenhaltungen:
- WO-A1-2011/072809
- WO-A1-2011/113648
- WO-A1-2012/089479
- WO-A1-92/20554
- DE-A1- 10 236 886
- DE-A1- 102010 054 687
- DE-A1- 4 117 795
- DE-C2- 4 117 795

## Beschreibung

Die vorliegende Erfindung betrifft ein Verfahren zum Betreiben eines Scheibenwaschsystems. Ferner bezieht sich die Erfindung auf ein Computerprogramm. Herkömmliche Scheibenwaschsysteme nutzen Düsen, welche von der Motorhaube aus ein Waschmittel auf die Frontscheibe bringen. Aus dem Stand der Technik sind ferner Scheibenwaschsysteme für Fahrzeuge bekannt, bei welchen die Düse am Wischarm montiert ist.

In der WO 2014/198892 A1 ist ein Verfahren zum Waschen einer Scheibe eines Fahrzeuges offenbart. In der DE 10 2010 054687 A1 wird eine Scheibenwascheinrichtung sowie ein dazugehöriges Verfahren zur Reinigung von Scheiben eines Kraftfahrzeugs beschrieben. Nachteilhaft bei den bekannten Lösungen ist, dass ein Reinigungsergebnis bei der Scheibe noch unzureichend sein kann, oder dass die Reinigung mit einem erhöhten technischen Aufwand verbunden ist. Insbesondere im unteren Scheibenbereich kann die Reinigungsleistung nicht den daran gestellten Anforderungen entsprechen. Es ist daher eine Aufgabe der vorliegenden Erfindung, die voranstehend beschriebenen Nachteile zumindest teilweise zu beheben. Insbesondere ist es Aufgabe der vorliegenden Erfindung, ein verbessertes Scheibenwaschsystem bereitzustellen.

Die voranstehende Aufgabe wird gelöst durch ein Verfahren mit den Merkmalen des Anspruchs 1 und durch ein Computerprogramm mit den Merkmalen des Anspruchs 8.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, und jeweils umgekehrt, so dass bezüglich der Offenbarung zu den einzelnen Erfindungsaspekten stets wechselseitig Bezug genommen wird bzw. werden kann. Die Aufgabe wird insbesondere gelöst durch ein Verfahren zum Betreiben eines Scheibenwaschsystems, insbesondere Frontscheibenwaschsystems, eines Fahrzeuges. Hierbei ist vorgesehen, dass die nachfolgenden Schritte durchgeführt werden, bevorzugt nacheinander in der angegebenen oder in beliebiger Reihenfolge, wobei einzelne der Schritte auch wiederholt durchgeführt werden können:
- Wiederholtes Initiieren einer Wischbewegung wenigstens eines Wischarms an einer Scheibe, vorzugsweise Frontscheibe, des Fahrzeuges, bei welcher der (wenigstens eine) Wischarm eine Aufwärtsbewegung von einer unteren Wendelage in eine obere Wendelage und eine Abwärtsbewegung von der oberen Wendelage in die untere Wendelage ausführt,
- Initiieren einer Waschmittelausgabe für die jeweilige Wischbewegung, um ein Waschmittel, insbesondere ein Waschwasser und/oder eine Reinigungsflüssigkeit, während der Aufwärtsbewegung von wenigstens einer Düse des Wischarms auszugeben,
wobei das Initiieren der Waschmittelausgabe bereits bei der Abwärtsbewegung erfolgt, um das Waschmittel vor einem Erreichen der unteren Wendelage (durch den Wischarm während derselben Abwärtsbewegung) auf die Scheibe aufzubringen. In anderen Worten erfolgt das Initiieren der Waschmittelausgabe der Aufwärtsbewegung vorgelagert bereits bei der Abwärtsbewegung, um während derselben Abwärtsbewegung noch Waschmittel auf die Scheibe aufzubringen, damit bei der darauffolgenden Aufwärtsbewegung das zuvor aufgebrachte Waschmittel durch den Wischarm direkt gewischt werden kann. Hierdurch kann der Vorteil erzielt werden, dass eine ausreichende Befeuchtung der Scheibe mit Waschmittel im unteren Bereich an der unteren Wendelage gewährleistet wird. Konkret kann zum Wischen ein Wischblatt des Wischarms zum Einsatz kommen, und beim Ausgeben das Waschmittel durch die Düse vor dem Wischblatt gespritzt werden. Auf diese Weise kann ein möglichst sauberer unterer Scheibenbereich erhalten werden, und gleichzeitig die Sichtbeeinträchtigung durch das Waschmittel verringert werden.

Die Wischbewegung (auch Wischhub) kann wenigstens oder genau zwei Bewegungsphasen aufweisen: die Aufwärtsbewegung (Aufwärtshub) und die Abwärtsbewegung (Abwärtshub). Auf diese Weise wird eine Hin- und Herbewegung der Scheibenwischer, also u. a. des Wischarms, bereitgestellt. Der Wischarm bewegt sich dabei zwischen den Wendelagen hin und her, und wendet entsprechend in den Wendelagen (führt also einen Richtungswechsel von der Auf- in die Abwärtsbewegung und umgekehrt durch).

Die Angaben "untere", "obere" hinsichtlich der Wendelagen und "auf-" und "abwärts" hinsichtlich der Bewegung des Wischarms sollen zunächst im weiteren Sinne lediglich eine relative Orientierung bieten, ohne sich konkret auf die Fahrzeugrichtungen oder die Scheibe zu beziehen. Im engeren Sinne können die Angaben jedoch auch folgenden Bezug haben:
- Eine Ausgangslage (Parklage) des Wischarms, welche der unteren Wendelage entsprechen kann,
- eine der Wendelagen des Wischarms, welche wahlweise als oben oder unten definiert wird,
- die Fahrzeugrichtungen, insbesondere eine Fahrzeughochachse, sodass "aufwärts" die Bewegung in Richtung Fahrzeugdach und "abwärts" die Bewegung in Richtung Fahrzeugboden bezeichnet,
- seitliche Fahrzeugrichtungen (bezüglich der Fahrzeugquerachse),
- eine Ober- oder Unterseite der Scheibe.

Vorteilhaft ist es zudem, wenn das Fahrzeug als ein Kraftfahrzeug, insbesondere gleisloses Landkraftfahrzeug, zum Beispiel als ein Hybridfahrzeug, das eine Brennkraftmaschine und eine Elektromaschine zur Traktion umfasst oder als ein Elektrofahrzeug ausgebildet ist, vorzugsweise mit einem Hochvolt-Bordnetz und/oder einem Elektromotor. Insbesondere kann das Fahrzeug als ein Brennstoffzellenfahrzeug und/oder Personenkraftfahrzeug ausgebildet sein. Bevorzugt ist bei Ausführungsformen von Elektrofahrzeugen kein Verbrennungsmotor beim Fahrzeug vorgesehen, es wird dann ausschließlich durch elektrische Energie angetrieben.

Nach der Erfindung ist es vorgesehen, dass für (jede) der Wiederholungen der Wischbewegung jeweils die nachfolgenden Schritte durchgeführt werden:
- Deaktivieren der Waschmittelausgabe für die Abwärtsbewegung, nachdem die Waschmittelausgabe während der Aufwärtsbewegung erfolgt ist,
- Durchführen des Initiierens der Waschmittelausgabe bereits bei der Abwärtsbewegung, um das Waschmittel vor dem Erreichen der unteren Wendelage noch bei der(selben) Abwärtsbewegung auf die Scheibe (also der Aufwärtsbewegung vorgelagert) aufzubringen, und dieses Waschmittel erst in der (unmittelbar) darauffolgenden Aufwärtsbewegung (durch den Wischarm) zu wischen.

In anderen Worten wird (nur) die Aufwärtsbewegung genutzt, um das Waschmittel zu wischen, und die Abwärtsbewegung überwiegend ohne Ausgabe von Waschmittel auskommen. Damit wird der Vorteil erzielt, dass die Sichteinschränkung durch das aufgebrachte Waschmittel auf der Windschutzscheibe erheblich reduziert und/oder der Waschmittelverbrauch reduziert werden kann. Zudem kann gewährleistet werden, dass durch die vorgelagerte Aufbringung des Waschmittels bereits bei Beginn der Aufwärtsbewegung Waschmittel an der Scheibe zum Wischen zur Verfügung steht. Es ist also ein vorgelagerter Spritzbeginn bereits im Abwärtshub möglich.

Ein weiterer Vorteil im Rahmen der Erfindung ist erzielbar, wenn (die) wenigstens eine Düse zur einseitigen Ausgabe des Waschmittels am Wischarm ausgebildet ist, wobei vorzugsweise das Waschmittel von der Düse in Richtung der Aufwärtsbewegung ausgegeben wird, um das Waschmittel in Bezug auf die Aufwärtsbewegung vor einem Wischblatt des Wischarms auf die Scheibe aufzutragen. Damit kann eine Scheibenreinigung während der Aufwärtsbewegung durchgeführt werden, und insbesondere sofort bei Beginn der Aufwärtsbewegung. Die Scheibenreinigung erfolgt somit vorteilhafterweise gemäß einer Nassarm-Waschfunktion.

Ferner ist es denkbar, dass die Waschmittelausgabe für die Abwärtsbewegung vor oder bei Erreichen der oberen Wendelage deaktiviert wird, und während der Abwärtsbewegung überwiegend deaktiviert bleibt, und erst vor dem Erreichen der unteren Wendelage Waschmittel wieder ausgegeben wird, um dieses Waschmittel erst in der darauffolgenden Aufwärtsbewegung (durch den Wischarm) zu wischen. In anderen Worten kann die Deaktivierung bereits erfolgen, bevor die obere Wendelage erreicht ist. Damit kann sichergestellt werden, dass kein Waschmittel auf der Scheibe verbleibt, und die Sicht beeinträchtigt.

Nach der Erfindung ist weiterhin vorgesehen, dass eine Zeitdauer der jeweiligen (sich wiederholenden) Wischbewegung gemessen wird, oder eine solche Messung initiiert wird, und vorzugsweise das Initiieren der Waschmittelausgabe zeitlich in Abhängigkeit von der gemessenen Zeitdauer durchgeführt (insbesondere getriggert) wird, um das Waschmittel bei Vorliegen (Erreichen) einer vorgegebenen Position des Wischarms (an der Scheibe) während der Wischbewegung auszugeben. So ist es denkbar, dass das Scheibenwaschsystem derart ausgeführt ist, dass nicht alle relevanten Positionen des Wischarms direkt ermittelt werden können. Bspw. kann beim Einsatz eines Rundläufermotors nur eine Parklage oder eine untere Wendelage als die Position ermittelt werden. Dennoch kann es sinnvoll sein, das Erreichen der Position durch den Wischarm zu erkennen, bei welcher sich der Wischarm kurz vor der unteren Wendelage befindet. An dieser Position soll bspw. die Waschmittelausgabe initiiert werden. Um trotz der fehlenden Information über die Position einen Anhaltspunkt dafür zu erhalten, wann das Initiieren der Waschmittelausgabe erfolgen soll, kann die Zeitdauer einer vollständigen und abgeschlossenen Wischbewegung genutzt werden. Da die Wischbewegung aufgrund der Konstruktion des Scheibenwaschsystems vorbekannt ist, kann anhand dieser Zeitdauer die ungefähre Position des Wischarms anhand der aktuellen Laufzeit geschätzt werden, wobei die Laufzeit die aktuelle Zeitdauer der nichtabgeschlossenen Wischbewegung ab Messbeginn und/oder Verlassen der unteren Wendelage bezeichnet.

Es ist ferner denkbar, dass anhand der gemessenen Zeitdauer wenigstens einer der Wischbewegungen eine Zeitdauer für die nachfolgende Wischbewegung extrapoliert wird, um bei der nachfolgenden Wischbewegung das Initiieren der Waschmittelausgabe anhand der extrapolierten Zeitdauer durchzuführen. So kann anhand der gemessenen Zeitdauer geschätzt werden, wie lange die nachfolgende Wischbewegung dauern wird. Somit kann geschätzt werden, nach welcher Zeitdauer ab Messbeginn und/oder Verlassen der unteren Wendelage die Position erreicht wird, bei welcher das Initiieren der Waschmittelausgabe stattfinden soll. Im einfachsten Falle kann dabei auch die gemessene Zeitdauer unverändert als die extrapolierte Zeitdauer angenommen werden, welche auch die nachfolgende Wischbewegung benötigen wird. Auch kann anhand der gemessenen Zeitdauer der vollständigen Wischbewegung (also einer Zyklusdauer) in eine Winkelgeschwindigkeit umgerechnet werden. Anhand dieser Winkelgeschwindigkeit kann dann die Zeit berechnet werden, nach welcher das Initiieren der Waschmittelausgabe stattfinden muss (und damit ein bestimmter Vorlagerungswinkel erzeugt wird). Sollte dabei die untere Wendelage erreicht werden, bevor das Initiieren der Waschmittelausgabe erfolgt ist, kann auf eine fehlerhafte Schätzung geschlossen werden und das Initiieren sofort stattfinden.

Ein Initiieren der Waschmittelausgabe kann z. B. dadurch erfolgen, dass eine Waschpumpe des Scheibenwaschsystems angesteuert wird. Auf diese Weise kann Waschmittel zu den Düsen der Wischarme befördert werden.

Des Weiteren ist es im Rahmen der Erfindung optional möglich, dass anhand der gemessenen Zeitdauer wenigstens einer oder mehrerer der Wischbewegungen eine durchschnittliche Zeitdauer bestimmt wird, um bei der nachfolgenden Wischbewegung das Initiieren der Waschmittelausgabe anhand der durchschnittlichen Zeitdauer durchzuführen. Anstelle einer Extrapolation ist es somit auch denkbar, dass der Durchschnitt der gemessenen Zeitdauern ermittelt wird. Mit dieser Zeitdauer kann ebenfalls geschätzt werden, nach welcher Zeitdauer ab Messbeginn und/oder Verlassen der unteren Wendelage die Position erreicht wird, bei welcher das Initiieren der Waschmittelausgabe stattfinden soll.

Vorteilhafterweise kann bei der Erfindung vorgesehen sein, dass zur Messung der Zeitdauer ein Erreichen einer einzigen Wendelage der Wendelagen als einzige Position des Wischarms während der Wischbewegung ermittelt wird, um vorzugsweise die Zeitdauer als Dauer zwischen einem ersten Erreichen dieser Wendelage und einem darauffolgenden Erreichen dieser Wendelage zu ermitteln. Dies ermöglicht es, die Position für das Initiieren der Waschmittelausgabe auch dann zu bestimmen, wenn weitergehende Informationen über die Position des Wischarms und/oder der Zeitdauer der vollständigen Wischbewegung fehlen.

Es kann von Vorteil sein, wenn im Rahmen der Erfindung zur Ausführung der Wischbewegung der Wischarm durch einen Rundläufermotor angetrieben wird. Auf diese Weise können die Kosten für das Scheibenwaschsystem deutlich reduziert werden. Der Rundläufermotor kann hierbei als ein umlaufender Elektromotor mit nur einer Laufrichtung ausgeführt sein. Um dennoch die Richtungswechsel zwischen der Auf- und Abwärtsbewegung durchzuführen, kann ein Getriebe wie ein Hebelgetriebe den Rundläufermotor mit dem Wischarm verbinden. Das Getriebe kann z. B. die Drehbewegung des Rundläufermotors über eine Kinematik in die Auf- und Abwärtsbewegung umwandeln. Wenn die Hebelarme des Getriebes zudem unterschiedlich lang sind, kann ggf. eine unterschiedliche Spitzenposition am Umkehrpunkt (also die Wendelagen) bewirkt werden.

Ebenfalls Gegenstand der Erfindung ist ein Computerprogramm, insbesondere Computerprogrammprodukt. Hierbei ist vorgesehen, dass das Computerprogramm Befehle umfasst, die bei der Ausführung des Computerprogramms durch einen Computer diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ferner unter Schutz gestellt ist ein Scheibenwaschsystem, welches zur Ausführung eines erfindungsgemäßen Verfahrens geeignet ist, bevorzugt durch die Ausführung eines erfindungsgemäßen Computerprogramms.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Scheibenwaschsystems,
- Figur 2: eine schematische Darstellung wenigstens eines Wischzyklus,
- Figur 3: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

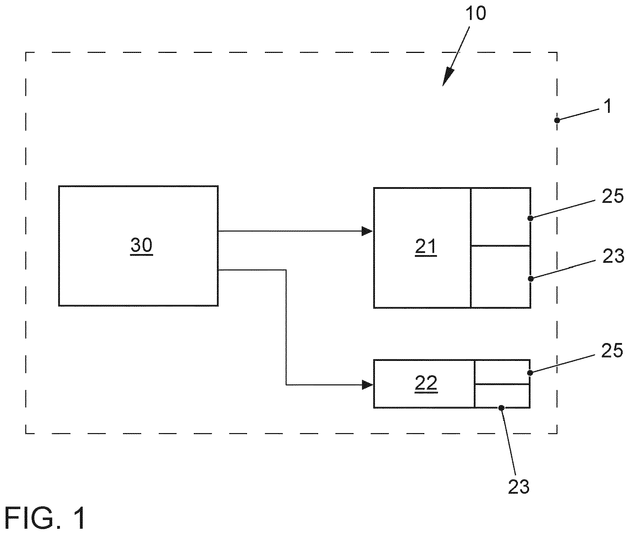

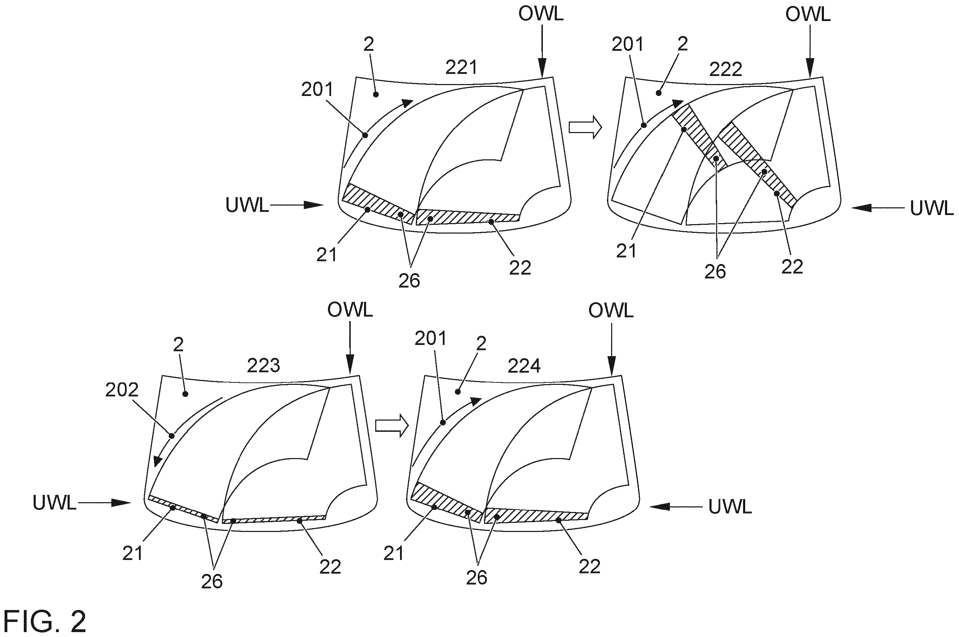

In Figur 1 ist schematisch ein Scheibenwaschsystem 10 gezeigt, welches zum Reinigen einer in Figur 2 gezeigten Scheibe 2 eines Fahrzeuges 1 ausgeführt sein kann. Wie mit weiteren Einzelheiten in Figur 2 gezeigt ist, können an der Scheibe 2, insbesondere Windschutzscheibe, zwei Wischarme 21, 22 angeordnet sein. Die Wischarme können über wenigstens einen Wischermotor 30, vorzugsweise Rundläufermotor oder Reversiermotor, angesteuert werden, um eine Wischbewegung über die Windschutzscheibe durchzuführen. Zur Vereinfachung ist in Figur 1 lediglich ein Wischmotor 30 dargestellt. Ferner ist wenigstens ein Wischblatt 23 und wenigstens eine Düse 25 des jeweiligen Wischarms 21, 22 gezeigt.

Wenn das Scheibenwaschsystem 10 gemäß der sogenannten "Nassarm-Technik" ausgebildet ist, kann das Waschmittel 26 direkt vom Wischarm 21 auf die Scheibe 2 aufgebracht werden. Hierzu können die Wischarme 21, 22 die wenigstens eine Düse 25, konkret Spritzdüsen, aufweisen, welche mittels einer nicht näher dargestellten Zuleitung das Waschmittel 26 (auch als Wischwasser bezeichnet) erhalten können. Diese Düsen können auf einer Seite der Wischarme liegen, welche der oberen Wendelage OWL zugewandt ist (s. Figur 2). Das Waschmittel umfasst z. B. eine Scheibenreinigungsflüssigkeit und/oder Waschwasser.

Das Scheibenwaschsystem 10 kann bei Verwendung der Nassarm-Technik so gesteuert sein, dass bei der Aufwärtsbewegung 201 der Wischarme 21, 22 das Waschmittel 26 durch Aktivierung einer Waschpumpe ausgesprüht wird, während bei der Abwärtsbewegung 202 die Waschpumpe deaktiviert ist, also keine Reinigungsflüssigkeit austritt.

In Figur 2 sind beispielhafte Waschzyklen 221, 222, 223, 224 gezeigt. Gemäß einem ersten Waschzyklus 221 kann das Reinigen der Scheibe 2 für eine bestimmte Dauer erfolgen, wobei die Aufwärtsbewegung 201 der Wischarme 21, 22 von der unteren Wendelage UWL in die obere Wendelage OWL durch einen Pfeil gekennzeichnet ist. Ebenfalls dargestellt ist das Waschmittel 26, welches zur Unterstützung der Reinigung aufgebracht wird. Um ferner auch bestimmte Bereiche der Scheibe 2 intensiver zu reinigen, z. B. einen Bereich vor einer Kamera oder dergleichen, kann gemäß einem zweiten Waschzyklus 222 an dieser Stelle vermehrt das Waschmittel 26 ausgegeben werden. Bei einem dritten Waschzyklus 223 ist die vorgelagerte Ausgabe des Waschmittels 26 bereits vor Erreichen der unteren Wischlage UWL visualisiert. Hierzu ist auch die Abwärtsbewegung 202 durch einen Pfeil gekennzeichnet. Bei einem vierten Waschzyklus 224 kann daraufhin das Reinigen der Scheibe 2 durch die Aufwärtsbewegung 201 erfolgen.

Wie in Figur 2 erkennbar ist, kann wenigstens eine Düse 25 zur einseitigen Ausgabe des Waschmittels 26 am Wischarm 21 ausgebildet sein, wobei das Waschmittel 26 von der Düse 25 in Richtung der Aufwärtsbewegung 201 ausgegeben wird, um das Waschmittel 26 in Bezug auf die Aufwärtsbewegung 201 vor einem Wischblatt 23 des Wischarms 21 auf die Scheibe 2 aufzutragen.

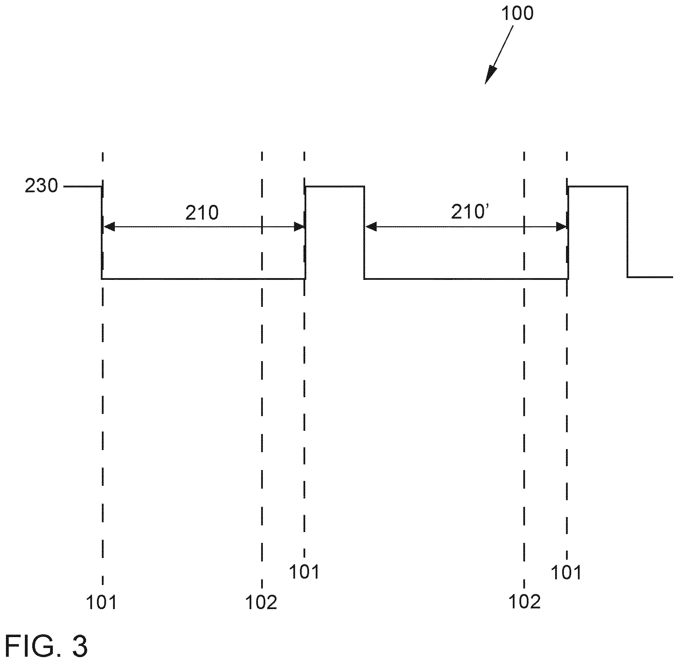

In Figur 3 ist ein erfindungsgemäßes Verfahren 100 zum Betreiben eines Scheibenwaschsystems 10 eines Fahrzeuges 1 mit weiteren Einzelheiten visualisiert. Gemäß einem ersten Verfahrensschritt 101 erfolgt zunächst ein Initiieren einer Wischbewegung wenigstens eines Wischarms 21 an einer Scheibe 2 des Fahrzeuges 1, wobei bei der Wischbewegung der Wischarm 21 eine Aufwärtsbewegung 201 von einer unteren Wendelage UWL in eine obere Wendelage OWL und eine Abwärtsbewegung 202 von der oberen Wendelage OWL in die untere Wendelage UWL ausführt. Dargestellt ist dabei ein Positionssignal 230, welches das Erreichen der unteren Wendelage UWL und/oder einer Parklage (oder alternativ auch der oberen Wendelage OWL) signalisiert. Es kann möglich sein, dass bei einem Scheibenwaschsystem 10 lediglich diese Information verfügbar ist, um die Ausgabe des Waschmittels 26 zu steuern. So kann zur Messung der Zeitdauer 210 ein Erreichen einer einzigen der Wendelagen UWL, OWL als einzige Position des Wischarms 21 während der Wischbewegung ermittelt werden, um die Zeitdauer 210 als Dauer zwischen einem Erreichen dieser Wendelage UWL, OWL und einem darauffolgenden Erreichen dieser Wendelage UWL, OWL zu ermitteln.

Gemäß einem zweiten Verfahrensschritt 102 erfolgt ein Initiieren einer Waschmittelausgabe für die jeweilige Wischbewegung, um das Waschmittel 26 während der Aufwärtsbewegung 201 von wenigstens einer Düse 25 des Wischarms 21 auszugeben. Dabei erfolgt das Initiieren der Waschmittelausgabe bereits bei der Abwärtsbewegung 202, um das Waschmittel 26 vor einem Erreichen der unteren Wendelage UWL auf die Scheibe 2 aufzubringen.

Ferner ist dargestellt, dass eine Zeitdauer 210 der jeweiligen Wischbewegung gemessen wird, und das Initiieren der Waschmittelausgabe zeitlich in Abhängigkeit von der gemessenen Zeitdauer 210 durchgeführt wird, um das Waschmittel 26 bei Vorliegen einer vorgegebenen Position des Wischarms 21 während der Wischbewegung auszugeben. Diese Position befindet sich dabei insbesondere vor der Position, welche durch das Positionssignal 230 signalisiert wird. Anhand der gemessenen Zeitdauer 210 wenigstens einer der Wischbewegungen kann z. B. eine Zeitdauer 210' für die nachfolgende Wischbewegung extrapoliert werden, um bei der nachfolgenden Wischbewegung das Initiieren der Waschmittelausgabe anhand der extrapolierten Zeitdauer 210' durchzuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Scheibe

- 10: Scheibenwaschsystem

- 21: Wischarm, erster Wischarm
- 22: zweiter Wischarm
- 23: Wischblatt
- 25: Düse
- 26: Waschmittel

- 30: Rundläufermotor

- 100: Verfahren
- 101: erster Verfahrensschritt, Wischbewegung
- 102: zweiter Verfahrensschritt, Initiieren der Waschmittelausgabe

- 201: Aufwärtsbewegung
- 202: Abwärtsbewegung
- 210: Zeitdauer, gemessene Zeitdauer

- 221: erster Waschzyklus
- 222: zweiter Waschzyklus
- 223: dritter Waschzyklus
- 224: vierter Waschzyklus
- 230: Positionssignal

- 210': extrapolierte Zeitdauer

- OWL: obere Wendelage
- UWL: untere Wendelage

## Patentansprüche

1. Verfahren (100) zum Betreiben eines Scheibenwaschsystems (10) eines Fahrzeuges (1), wobei die nachfolgenden Schritte durchgeführt werden:
- Wiederholtes Initiieren einer Wischbewegung wenigstens eines Wischarms (21) an einer Scheibe (2) des Fahrzeuges (1), bei welcher der Wischarm (21) eine Aufwärtsbewegung (201) von einer unteren Wendelage (UWL) in eine obere Wendelage (OWL) und eine Abwärtsbewegung (202) von der oberen Wendelage (OWL) in die untere Wendelage (UWL) ausführt,
- Initiieren einer Waschmittelausgabe für die jeweilige Wischbewegung, um ein Waschmittel (26) während der Aufwärtsbewegung (201) von wenigstens einer Düse (25) des Wischarms (21) auszugeben,
wobei das Initiieren der Waschmittelausgabe bereits bei der Abwärtsbewegung (202) erfolgt, um das Waschmittel (26) vor einem Erreichen der unteren Wendelage (UWL) auf die Scheibe (2) aufzubringen,
**dadurch gekennzeichnet,**
**dass** für die Wiederholungen der Wischbewegung jeweils die nachfolgenden Schritte durchgeführt werden:
- Deaktivieren der Waschmittelausgabe für die Abwärtsbewegung (202), nachdem die Waschmittelausgabe während der Aufwärtsbewegung (201) erfolgt ist,
- Durchführen des Initiierens der Waschmittelausgabe bereits bei der Abwärtsbewegung (202), um das Waschmittel (26) vor dem Erreichen der unteren Wendelage (UWL) noch bei der Abwärtsbewegung (202) auf die Scheibe (2) aufzubringen, und dieses Waschmittel (26) erst in der darauffolgenden Aufwärtsbewegung (201) zu wischen,
und **dass** eine Zeitdauer (210) der jeweiligen Wischbewegung gemessen wird, und das Initiieren der Waschmittelausgabe zeitlich in Abhängigkeit von der gemessenen Zeitdauer (210) durchgeführt wird, um das Waschmittel (26) bei Vorliegen einer vorgegebenen Position des Wischarms (21) während der Wischbewegung auszugeben.

2. Verfahren (100) nach Anspruch 1,
**dadurch gekennzeichnet,**
**dass** die wenigstens eine Düse (25) zur einseitigen Ausgabe des Waschmittels (26) am Wischarm (21) ausgebildet ist, wobei das Waschmittel (26) von der Düse (25) in Richtung der Aufwärtsbewegung (201) ausgegeben wird, um das Waschmittel (26) in Bezug auf die Aufwärtsbewegung (201) vor einem Wischblatt (23) des Wischarms (21) auf die Scheibe (2) aufzutragen.

3. Verfahren (100) nach einem der vorhergehenden Ansprüche,
**dadurch gekennzeichnet,**
**dass** die Waschmittelausgabe für die Abwärtsbewegung (202) vor oder bei Erreichen der oberen Wendelage (OWL) deaktiviert wird, und während der Abwärtsbewegung (202) überwiegend deaktiviert bleibt, und bereits vor dem Erreichen der unteren Wendelage (UWL) das Waschmittel (26) wieder ausgegeben wird, um dieses Waschmittel (26) erst in der darauffolgenden Aufwärtsbewegung (201) durch den Wischarm (21) zu wischen.

4. Verfahren (100) nach Anspruch1,
**dadurch gekennzeichnet,**
**dass** anhand der gemessenen Zeitdauer (210) wenigstens einer der wiederholten Wischbewegungen eine Zeitdauer (210) für die nachfolgende Wischbewegung extrapoliert wird, um bei der nachfolgenden Wischbewegung das Initiieren der Waschmittelausgabe anhand der extrapolierten Zeitdauer (210) durchzuführen.

5. Verfahren (100) nach Anspruch1,
**dadurch gekennzeichnet,**
**dass** anhand der gemessenen Zeitdauer (210) wenigstens einer oder mehrerer der wiederholten Wischbewegungen eine durchschnittliche Zeitdauer (210) bestimmt wird, um bei der nachfolgenden Wischbewegung das Initiieren der Waschmittelausgabe anhand der durchschnittlichen Zeitdauer (210) durchzuführen.

6. Verfahren (100) nach einem der Ansprüche 1, 4 und 5,
**dadurch gekennzeichnet,**
**dass** zur Messung der Zeitdauer (210) ein Erreichen einer einzigen der Wendelagen (UWL, OWL) als einzige Position des Wischarms (21) während der Wischbewegung ermittelt wird, um die Zeitdauer (210) als Dauer zwischen einem Erreichen dieser Wendelage (UWL, OWL) und einem darauffolgenden Erreichen dieser Wendelage (UWL, OWL) zu ermitteln.

7. Verfahren (100) nach einem der Ansprüche 1, 4 bis 6,
**dadurch gekennzeichnet,**
**dass** zur Ausführung der Wischbewegung der Wischarm (21) durch einen Rundläufermotor (30) angetrieben wird.

8. Computerprogramm, umfassend Befehle, die bei der Ausführung des Computerprogramms durch einen Computer diesen veranlassen, die Schritte eines Verfahrens nach einem der vorhergehenden Ansprüche auszuführen.

## Claims

1. Method (100) for operating a windshield washing system (10) of a vehicle (1), the following steps being carried out:
- repeatedly initiating a wiping movement of at least one wiper arm (21) on a windshield (2) of the vehicle (1), in which the wiper arm (21) performs an upward movement (201) from a lower turning point (UWL) to an upper turning point (OWL), and a downward movement (202) from the upper turning point (OWL) to the lower turning point (UWL),
- initiating a detergent output for the relevant wiping movement in order to output a detergent (26) during the upward movement (201) from at least one nozzle (25) of the wiper arm (21),
the detergent output having already been initiated during the downward movement (202) in order to apply the detergent (26) to the windshield (2) before the lower turning point (UWL) is reached,
**characterized in that,**
for each of the repetitions of the wiping motion, the following steps are carried out:
- deactivating the detergent output for the downward movement (202) after the detergent output has taken place during the upward movement (201),
- already initiating the detergent output during the downward movement (202), in order to apply the detergent (26) to the windshield (2) during the downward movement (202), before the lower turning point (UWL) is reached, and to only wipe this detergent (26) during the subsequent upward movement (201),
**and in that** a time interval (210) of the relevant wiping movement is measured, and the initiation of the detergent output is carried out depending on the measured time interval (210) in order to output the detergent (26) when a predetermined position of the wiper arm (21) is present during the wiping movement.

2. Method (100) according to claim 1,
**characterized in that**
the at least one nozzle (25) is designed for one-sided output of the detergent (26) on the wiper arm (21), the detergent (26) being output from the nozzle (25) in the direction of the upward movement (201) in order to apply the detergent (26) to the windshield (2) in front of a wiper blade (23) of the wiper arm (21) with respect to the upward movement (201).

3. Method (100) according to either of the preceding claims,
**characterized in that**
the detergent output for the downward movement (202) is deactivated before or when the upper turning point (OWL) is reached and remains predominantly deactivated during the downward movement (202), and the detergent (26) is already output again before the lower turning point (UWL) is reached, in order to only wipe this detergent (26) by means of the wiper arm (21) during the subsequent upward movement (201).

4. Method (100) according to claim 1,
**characterized in that**
based on the measured time interval (210) of at least one of the repeated wiping movements, a time interval (210) for the subsequent wiping movement is extrapolated in order to initiate the detergent output during the subsequent wiping movement based on the extrapolated time interval (210).

5. Method (100) according to claim 1,
**characterized in that**
based on the measured time interval (210) of at least one or more of the repeated wiping movements, an average time interval (210) is determined in order to initiate the detergent output during the subsequent wiping movement based on the average time interval (210).

6. Method (100) according to any of claims 1, 4 and 5,
**characterized in that**
in order to measure the time interval (210), it is determined that a single one of the turning points (UWL, OWL) has been reached as a single position of the wiper arm (21) during the wiping movement, in order to determine the time interval (210) as the duration between reaching this turning point (UWL, OWL) and subsequently reaching this turning point (UWL, OWL).

7. Method (100) according to any of claims 1 and 4 to 6,
**characterized in that**
the wiper arm (21) is driven by a rotary motor (30) to perform the wiping movement.

8. Computer program comprising commands which, when the computer program is executed by a computer, cause the computer to execute the steps of a method according to any of the preceding claims.

## Revendications

1. Procédé (100) permettant de faire fonctionner un système de lavage de vitres (10) d'un véhicule (1), dans lequel les étapes suivantes sont réalisées :
- initiation répétée d'un mouvement d'essuyage d'au moins un bras d'essuie-glace (21) sur une vitre (2) du véhicule (1), lors duquel le bras d'essuie-glace (21) exécute un mouvement vers le haut (201) d'une position de rotation inférieure (UWL) vers une position de rotation supérieure (OWL) et un mouvement vers le bas (202) de la position de rotation supérieure (OWL) vers la position de rotation inférieure (UWL),
- initiation d'une distribution d'agent de nettoyage pour le mouvement d'essuyage respectif afin de distribuer un agent de nettoyage (26) pendant le mouvement vers le haut (201) au moyen d'au moins une buse (25) du bras d'essuie-glace (21),
dans lequel l'initiation de la distribution d'agent de lavage est déjà effectuée lors du mouvement vers le bas (202) afin d'appliquer l'agent de lavage (26) sur la vitre (2) avant que la position de rotation inférieure (UWL) ne soit atteinte,
**caractérisé en ce**
**que** les étapes suivantes sont respectivement réalisées pour les répétitions du mouvement d'essuyage :
- désactivation de la distribution d'agent de nettoyage pour le mouvement vers le bas (202) après que la distribution d'agent de nettoyage a été effectuée pendant le mouvement vers le haut (201),
- réalisation de l'initiation de la distribution d'agent de lavage déjà lors du mouvement vers le bas (202) afin d'appliquer l'agent de lavage (26) sur la vitre (2) encore lors du mouvement vers le bas (202) avant que la position de rotation inférieure (UWL) ne soit atteinte, et d'essuyer ledit agent de lavage (26) seulement lors du mouvement vers le haut (201) qui suit,
**et qu**'une durée (210) du mouvement d'essuyage respectif est mesurée, et l'initiation de la distribution d'agent de lavage est réalisée temporellement en fonction de la durée (210) mesurée afin de distribuer l'agent de lavage (26) en présence d'une position prédéfinie du bras d'essuie-glace (21) pendant le mouvement d'essuyage.

2. Procédé (100) selon la revendication 1,
**caractérisé en ce**
**que** l'au moins une buse (25) est conçue pour distribuer l'agent de lavage (26) d'un côté sur le bras d'essuie-glace (21), dans lequel l'agent de lavage (26) est distribué par la buse (25) dans la direction du mouvement vers le haut (201) pour appliquer l'agent de lavage (26) sur la vitre (2) par rapport au mouvement vers le haut (201) avant un balai d'essuie-glace (23) du bras d'essuie-glace (21).

3. Procédé (100) selon l'une des revendications précédentes,
**caractérisé en ce**
**que** la distribution d'agent de lavage pour le mouvement vers le bas (202) est désactivée avant la position de rotation supérieure (OWL) ou lorsque celle-ci est atteinte, et reste principalement désactivée pendant le mouvement vers le bas (202), et l'agent de lavage (26) est à nouveau distribué déjà avant que la position de rotation inférieure (UWL) ne soit atteinte afin d'essuyer ledit agent de lavage (26) avec le bras d'essuie-glace (21) uniquement lors du mouvement vers le haut (201) qui suit.

4. Procédé (100) selon la revendication 1,
**caractérisé en ce**
**qu'à** l'aide de la durée (210) mesurée d'au moins l'un des mouvements d'essuyage répétés, une durée (210) est extrapolée pour le mouvement d'essuyage suivant afin de réaliser, lors du mouvement d'essuyage suivant, l'initiation de la distribution d'agent de lavage à l'aide de la durée (210) extrapolée.

5. Procédé (100) selon la revendication 1,
**caractérisé en ce**
**qu'à** l'aide de la durée (210) mesurée d'au moins un ou plusieurs des mouvements d'essuyage répétés, une durée (210) moyenne est déterminée afin de réaliser, lors du mouvement d'essuyage suivant, l'initiation de la distribution d'agent de lavage à l'aide de la durée (210) moyenne.

6. Procédé (100) selon l'une des revendications 1, 4 et 5,
**caractérisé en ce**
**que,** pour mesurer la durée (210), une atteinte d'une seule des positions de rotation (UWL, OWL) est déterminée comme position unique du bras d'essuie-glace (21) pendant le mouvement d'essuyage afin de déterminer la durée (210) comme durée entre une atteinte de ladite position de rotation (UWL, OWL) et une atteinte suivante de ladite position de rotation (UWL, OWL).

7. Procédé (100) selon l'une des revendications 1, 4 à 6,
**caractérisé en ce**
**que,** pour l'exécution du mouvement d'essuyage, le bras d'essuie-glace (21) est entraîné par un moteur rotatif (30).

8. Programme informatique, comprenant des instructions qui, lorsque le programme informatique est exécuté par un ordinateur, amènent celui-ci à exécuter les étapes d'un procédé selon l'une des revendications précédentes.
